Europäisches Patentamt

European Patent Office

Office européen des brevets

(11) Publication number: 0 369 028
A1

## EUROPEAN PATENT APPLICATION
### published in accordance with Art. 158(3) EPC

(21) Application number: 89905178.3

(22) Date of filing: 01.05.89

(86) International application number:
PCT/JP89/00457

(87) International publication number:
WO 89/10822 (16.11.89 89/27)

(51) Int. Cl.5: B25J 9/10, B25J 9/16, G05D 3/00

(30) Priority: 06.05.88 JP 110797/88

(43) Date of publication of application:
23.05.90 Bulletin 90/21

(84) Designated Contracting States:
DE FR GB IT SE

(71) Applicant: KABUSHIKI KAISHA YASKAWA
DENKI SEISAKUSHO
2346, Ohaza-Fujita Yahatanishi-Ku
Kitakyushu-Shi Fukuoka-Ken806(JP)

(72) Inventor: YAMAMOTO, Minoru;Yahata
Plant,Kabushiki Kaisha
Yaskawa Denki SeisaKusho,2346
Ohaza-Fujita Yahata
ishi-ku Kitakyushu-shi Fukuoka 806(JP)
Inventor: GOSHO, Satoshi,Kokura Plant
Kabushiki Kaisha Yas
kawa Denki SeisaKusho 12-1 Ohte-machi
Kokurakita
ku Kitakyushu-shi Fukuoka 803(JP)

(74) Representative: Hertel, Werner, Dipl.-Phys. et
al
Patentanwälte Müller-Boré, Deufel, Schön,
Hertel Lewald, Otto Isartorplatz 6 Postfach 26
02 47
D-8000 München 26(DE)

(54) METHOD OF AND APPARATUS FOR CONTROLLING ROBOT HAVING MULTIPLE ROTARY SHAFTS.

(57) The work-space envelope of a conventional articulate multiple-shaft robot is limited to within $\pm 180°$ with respect to all shafts due to the construction of the robot. The expansion of the work-space envelope of a robot has come to be demanded recently, and the construction of and a control method for a robot has been improved accordingly, so that this envelope has been expanded to up to $\pm 360°$. However, it is difficult in some cases to apply such a control method to a robot having a shaft which is turned not less than $\pm 360°$, and the robot cannot be operated in some cases. Therefore, according to the present invention, in order that a signal representative of a position to which a shaft has been turned is indicative of an angle within the range of $\pm 360°$ with respect to a reference position of the same shaft, a signal representative of the number of revolutions which is obtained by multiplying the number of revo-

lutions of the mentioned shaft by an integer is added to or subtracted from the above actual position signal in accordance with a plus or minus sign thereof, and a signal representative of the result of this addition or subtraction is used as a signal representative of a position of rotation of the shaft at the time of starting of a posture control operation. This corrected link angle becomes less than $\pm 360°$. Therefore, if this control method is employed, a smooth interpolation operation can be carried out. Accordingly, the workspace envelope of an articulate multiple-shaft robot can be expanded.

FIG. 1

2

SPECIFICATION

CONTROL METHOD AND APPARATUS OF ROBOT HAVING

MULTI-ROTATING AXIS

[FIELD OF ART]

The present invention relates to a control method and apparatus including multiple rotating operations of at least one axis of a multiple axes (e.g. six axes) joint type robot.

[BACKGROUND OF THE INVENTION]

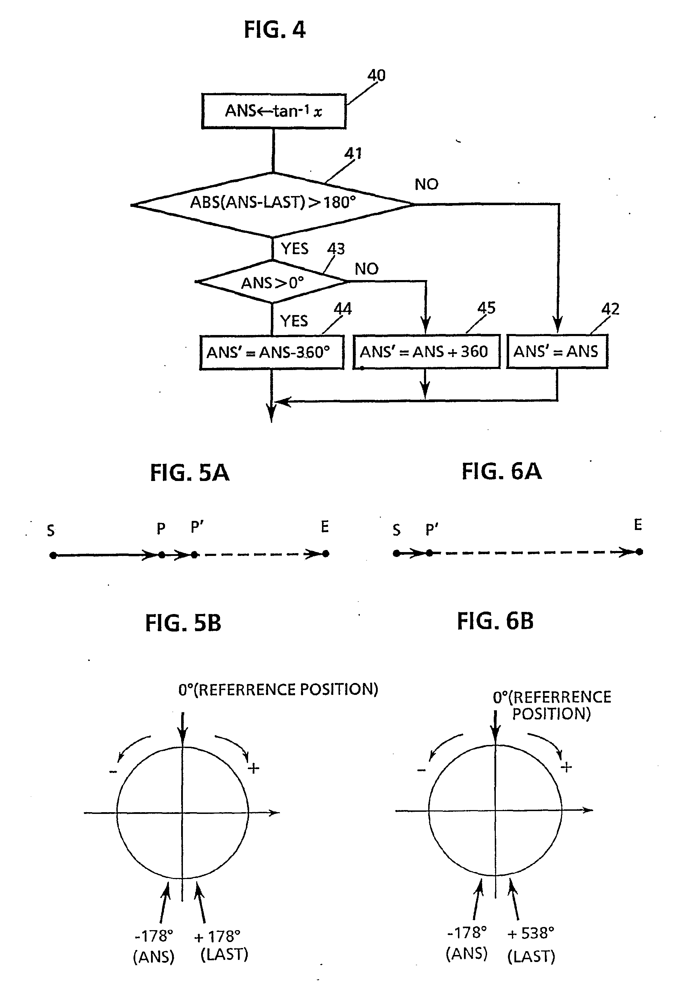

A six axes joint type robot including three basic axes and three wrist axes is structured by the following six axes as shown in Fig. 6:

(1) A 1st axis 2 provided at the upper part of a base 1 fixed on the ground to have the degree of freedom around the perpendicular ($Z_0$ axis)

(2) A 2nd axis 3 provided at the end part of the 1st axis 2 to have the degree of freedom around the $Z_1$ axis perpendicular to the $Z_0$ axis

(3) A 3rd axis 4 provided at the end part of the 2nd axis 3 to have the degree of freedom around the $Z_2$ axis parallel to the $Z_1$ axis

(4) A 4th axis 5 provided at the end part of the 3rd axis 4 to have the degree of freedom around the $Z_3$ axis perpendicular to the $Z_2$ axis

(5)    A 5th axis 6 provided at the end part of the 4th axis 5 to have the degree of freedom around the $Z_4$ axis perpendicular to the $Z_3$ axis

(6)    A 6th axis 7 provided at the end part of the 5th axis 6 to have the degree of freedom around the $Z_5$ axis perpendicular to the $Z_4$ axis

The 1st axis 2 to 3rd axis 4 are called the three basic axes, while the 4th axis 5 to 6th axis 7 are called the three wrist axes.

As described above, each joint has one degree of freedom and the robot as a whole has six degrees of freedom.

In such a six joint type robot, each axis has a restricted operating range within ±180 degrees from the structural reason thereof.

Recently, there has been a demand for the expansion of the operating range of robots. For this purpose, the structure of robots has been modified to provide the axes for realizing rotation of ±180 degrees or more. Thereby, the operating range can be expanded up to the range under ±360 degrees with improvement of the control method.

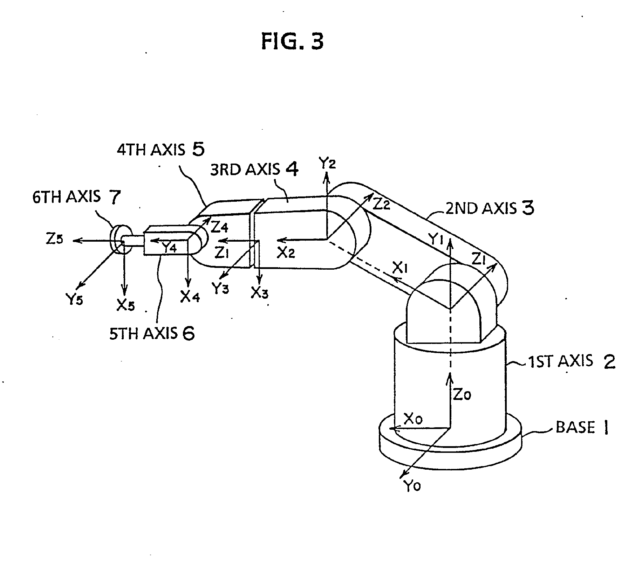

Such improved control method will be explained in the sequence of the flowchart shown in Fig. 4 with a calculation example of link angle (angle of each axis in the joint coordinates system) of the wrist joint (the 6th axis 7 in Fig. 3).

In the case of realizing linear interpolating operation by the 6 axes joint type robot shown in Fig. 3, the robot is operated by converting the rectangular coordinate data (position data and posture data) into each joint coordinate data (reverse conversion) in every one unit clock (one sampling period) to obtain a command value of each axis in the joint coordinate system and by giving such command values to each drive axis.

An example of such reverse conversion is described in the Japanese Laid-open Patent No. 62-193786. Namely in the reverse conversion, the command values of link angles $\theta_1$ - $\theta_6$ are obtained by the first step for calculating the link angles $\theta_1$, $\theta_2$, $\theta_3$ of three basic axes from the position data $P_x$, $P_y$, $P_z$, the second step for calculating the link angles $\theta_4$, $\theta_5$, $\theta_6$ of the wrist joints from the posture data $A_x$, $A_y$, $A_z$ (vectors of direction in which the robot hand comes near to an object), $O_x$, $O_y$, $O_z$ (vectors for designating the direction of robot hand) and $N_x$, $N_y$, $N_z$ (vectors of tangent direction for designating three vectors to retake the right hand system) and the link angles $\theta_1$, $\theta_2$, $\theta_3$ of three basic axes obtained in the first step, and the third step for calculating again the link angles of three basic axes from the above position data and the link angles obtained in the second step.

Step 40 in Fig. 4 indicates a step for obtaining the link angle of the 6th axis (link angle at the next position where the control point of the robot is to be moved to as a target) through the reverse conversion by the procedures explained above. In this case, the link angle of the obtained target value is defined as ANS. In step 40 of Fig. 4, x can be calculated from the formula

$$x = \sin \theta_6 / \cos \theta_6$$

which is prepared for obtaining ANS by the reverse conversion.

Here, the link angle of the target value ANS can be obtained from the position data and posture data, according to the reverse conversion method described above. This link angle is defined as a value uniquely within the range of -180° - +180° by obtaining a value of $\tan^{-1}x$ considering the signs of $\sin \theta_6$ and $\cos \theta_6$. However, the sign of angle which indicates the position is defined as + for clockwise from the reference position (0°) and - for counterclockwise.

After obtaining the link angle of target value ANS, a difference between ANS and the link angle of current value LAST is obtained in step 41 and checked to determine whether the absolute value thereof ABS (ANS - LAST) exceeds 180° or not. This check is carried out to determine the moving direction so that the movement (rotating angle) is minimized.

Here, in case ABS (ANS - LAST) ≦ 180°, correction of link angle of the target value is unnecessary. Therefore, the link angle of final target value ANS' is set equal to ANS (ANS' = ANS) in step 42.

In case ABS (ANS - LAST) > 180°, check for the link angle of target value ANS (ANS > 0°) is carried out in step 43.

Upon reception of this result, correction of the link angle of target value ANS is carried out in steps 44 and 45. In this case, the link angle of target value ANS is corrected to ANS' = ANS - 360° in step 44 or to ANS' = ANS + 360° in step 45.

In this method, there are teaching points (S, E) as shown in Fig. 5A and it is here supposed to conduct the linear interpolating operation between two points. When the target point after the one unit clock from the point (P) in the interpolating operation is defined as P', position and posture data are expressed respectively as follows.

$$P = \begin{bmatrix} X \\ Y \\ Z \\ \vec{N} \\ \vec{O} \\ \vec{A} \end{bmatrix}, \quad P' = \begin{bmatrix} X \\ Y \\ Z \\ \vec{N} \\ \vec{O} \\ \vec{A} \end{bmatrix} + \begin{bmatrix} \Delta X \\ \Delta Y \\ \Delta Z \\ \Delta \vec{N} \\ \Delta \vec{O} \\ \Delta \vec{A} \end{bmatrix}$$

Where

$$\vec{N} = \begin{bmatrix} N_x \\ N_y \\ N_z \end{bmatrix}, \quad \vec{O} = \begin{bmatrix} O_x \\ O_y \\ O_z \end{bmatrix}, \quad \vec{A} = \begin{bmatrix} A_x \\ A_y \\ A_z \end{bmatrix}$$

The link angle of the 6th axis at the point P' can be calculated by the reverse conversion from the position and posture data.

In this case, when the current position of the 6th axis at the point P is, for example, +178° and the calculation result at the point P' is -178° (Fig. 5B), the operation command of the 6th axis is defined by the difference -178° - 178° = -358°. Such operation command which is excessive as the interpolating operation per unit clock causes excessive operation on the 6th axis. If the 6th axis cannot follow the operation command even with the maximum operation speed of the 6th axis, an alarm function operates as the protection function, resulting in disabling operations. If the target value ANS exceeds ±180°, such conditions are produced.

According to the method shown in Fig. 4, in the case of the above example, after -178° is obtained as the target value ANS of the calculation result of the 6th axis at point P' in step 40, the absolute value of deviation between the current position of ±178° and the next target position -178° is obtained in step 41.

Namely, the absolute value of deviation of angle is expressed as follows.

ABS (ANS - LAST) = ABS (-178° - 178°) = 356° > 180°

Here, since ANS < 0°, ANS' = -178° + 360° = 182° can be obtained in step 45. Therefore, the operation command of 6th axis becomes 182° - 178° = +4°.

Thereby, the robot operates clockwise toward the target of corrected target value ANS' = +182° (same as -178° of ANS as the target position) from the current position LAST. This control system expands the easily operable range of robot to the angle under +360° exceeding +180°.

However, it has become apparent that a problem occurs in the operation in which some axis needs to be rotated for 360° or more and then is interpolated continuously.

Namely, in case there are two teaching points (S, E) as shown in Fig. 6A and the linear interpolating operation is carried out between these two points, it is supposed that the 6th axis rotates once or more at the interpolation starting point S and its current position is defined as +538°. In this case, as a result of reverse conversion at the target position P' after one unit clock, when the 6th axis is calculated to -178°, the following decision is made in step 41 by the correcting process of Fig. 4 for the link angle of target value ANS = 178°.

ABS (ANS - LAST) = ABS (-178° - 538°) = 716°

In this case, the processing of steps 43 and 45 are applied and the following result can be obtained.

ANS' = -178° + 360° = +182°

Here, when operation is carried out toward ANS from LAST, the operation of +182° - 538° = -356° must be conducted.

However, the ideal target operation after the one unit clock is the operation for +4° and the operation data of -356° is actually given to the robot. The operation commands which define excessive interpolating operations per one unit clock result in excessive operations for the 6th axis, which cannot be followed even by the maximum operation speed of the 6th axis. In this case, the alarm function as the protection function operates, disabling operations.

Above explanation has been made for the 6th axis 7 shown in Fig. 3 and this is also applied to all robot axes having the operation range of ±360°.

In the case where the robot axes having the operation ranges of ±360° or more carry out multi-rotating (rotation more than ±360°), the correct interpolating operation cannot be realized with the conventional method which can be used only for the operation of under ±360°.

It is therefore an object of the present invention to solve such problems and realize interpolating operation by robot when the operating range is expanded to ±360° or more.

[DISCLOSURE OF THE INVENTION]

In order to achieve such objective, the robot control method having the multi-rotating axes of the present invention is characterized in that the interpolating operation is started, in the multiple axes joint type robot system of the teaching playback system, after the signal obtained by subtracting the rotation signal corresponding to the number of rotations indicated by an integer from the reference position of the axis from the rotating position signal after rotation of such axis is applied as the rotating position for start of interpolating operation so that the rotating position signal after rotation of axis becomes the signal corresponding to the angle range under ±360° for the reference position of axis in such a case that the interpolating operation is carried out following the multi-rotating of axes having the operating range of ±360° or more by the link operation.

In the multiple axes joint type robot system of the teaching playback system having the axes having the operating range of ±360° or more, the control apparatus of robot having multi-rotating axes of the present invention is characterized in comprising a means for detecting the rotating position of axis from the reference position, a rotation calculating means for calculating the rotation signal corresponding to the number of rotations indicated by an integer sent from the reference position of the axis from the detected rotating position signal, a rotating position correcting means for subtracting the calculated number of rotations from the rotating position signal before movement to the interpolating operation and an interpolation control calculating means for obtaining interpolation data based on the corrected rotating position signal calculated by the rotating position correcting means and the position data obtained based on the teaching data.

In the present invention, it is an object thereof to realize an interpolating control in the robot having the multi-rotating axes, namely the axes having the rotating range of ±360° or more. In the case of conducting the interpolating operation under the condition that the axes rotate and the link angle becomes ±360° or more, a signal obtained by adding or subtracting the rotating angle corresponding to the integer times of the number of rotations to or from the current rotating position signal of the axes in accordance with the positive or negative sign of the rotating position signal is applied as a new position signal for starting the interpolating operation. In this case, the corrected link angle is under ±360° and thereby the successive interpolating operation can be controlled with the calculation method shown in Fig. 4.

For example, it is supposed here that the current value has become 360° × 5 turns + 60° = 1860° through 5 turns and +60° of the axis having the operating range of ±360° or more. If the linear interpolating operation is attempted under this condition, since the operation command which is difference from the link angle (within ±180°) of target value obtained by the reverse conversion becomes too large as the interpolating operation per one unit clock, an excessive operation is applied to operation of the 6th axis. If this 6th axis cannot follow such excessive operation even with its maximum operating speed, an alarm function as the protection function works, disabling the operation.

When calculation of "current value − 360° × number of rotations" is carried out, the current value of +60° (1860° − 360° × 5 turns) can be obtained. Therefore, the interpolating operation can be controlled by updating the current value to "+60°".

[BRIEF DESCRIPTION OF DRAWINGS]

Fig. 1 is a flowchart indicating an embodiment of the robot control method of the present invention;

Fig. 2 is a block diagram of a structure of controller of the present invention;

Fig. 3 is an outline view of 6 axes joint type robot;

Fig. 4 is a flowchart indicating the rotating position calculating method in the conventional robot control method;

Fig. 5A, Fig. 5B, Fig. 6A and Fig. 6B are diagrams for explaining problems of the prior art.

[DESCRIPTION OF THE PREFERRED EMBODIMENT]

The present invention will be explained concretely with reference to the embodiment shown in the accompanying drawings.

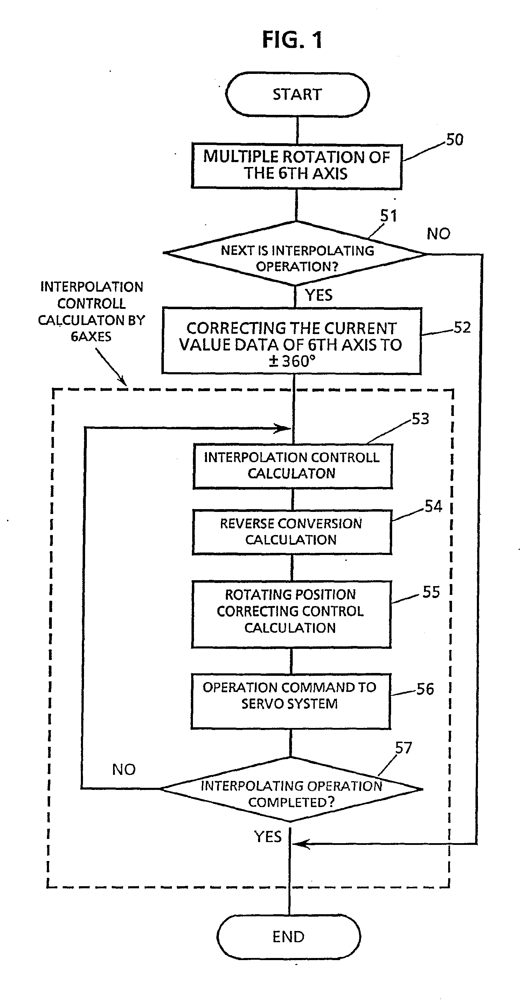

Fig. 1 is a flowchart indicating processing based on the present invention.

As shown in Fig. 1, the multi-rotation of the 6th axis provides the data of ±360° or more as the current values of this axis (step 50). Here, it is decided whether the current value of 6th axis is corrected or not depending on whether the next operation is the interpolating operation or not (step 51). When the next operation is the interpolating operation, the processing for correcting the current value data of 6th axis to under ±360° is executed (step 52).

When the current value of angle data of 6th axis is defined as Q', an integer value indicating the number of rotations as N and the corrected current value of angle data of 6th axis as Q, following relation can be obtained.

$$Q = Q' - 360 \times N$$

The corrected current value of angle data Q of the 6th axis is a value within ±360°.

Next, the interpolating control calculation (shown within the broken line of Fig. 1) by all six axes is carried out using the corrected current value of angle data Q of 6 axes. Namely, the position data $P_X$, $P_y$, $P_z$ corresponding the next interpolation point and posture data $N_X$, $N_y$, $N_z$, $O_X$, $O_y$, $O_z$, $A_X$, $A_y$, $A_z$ are obtained for every one unit clock (step 53). Thereafter, the reverse conversion indicated by step 40 of Fig. 4, for example, is carried out using the corrected current value of angle data of 6th axis Q ($\theta_6$), position data $P_X$, $P_y$, $P_z$ and posture data $N_z$, $N_y$, $N_z$, $O_X$, $O_y$, $O_z$, $A_X$, $A_y$, $A_z$ (step 54).

In step 55, the rotating position correcting control calculation is carried out on the basis of the processing of steps 41 - 45 of Fig. 4. The operation command is output to the servo system (step 56) using the target value ANS' obtained here. Upon completion of the operations, the next interpolating point is given and the processing of steps 53 - 56 are repeated until the interpolating operation completes (step 57).

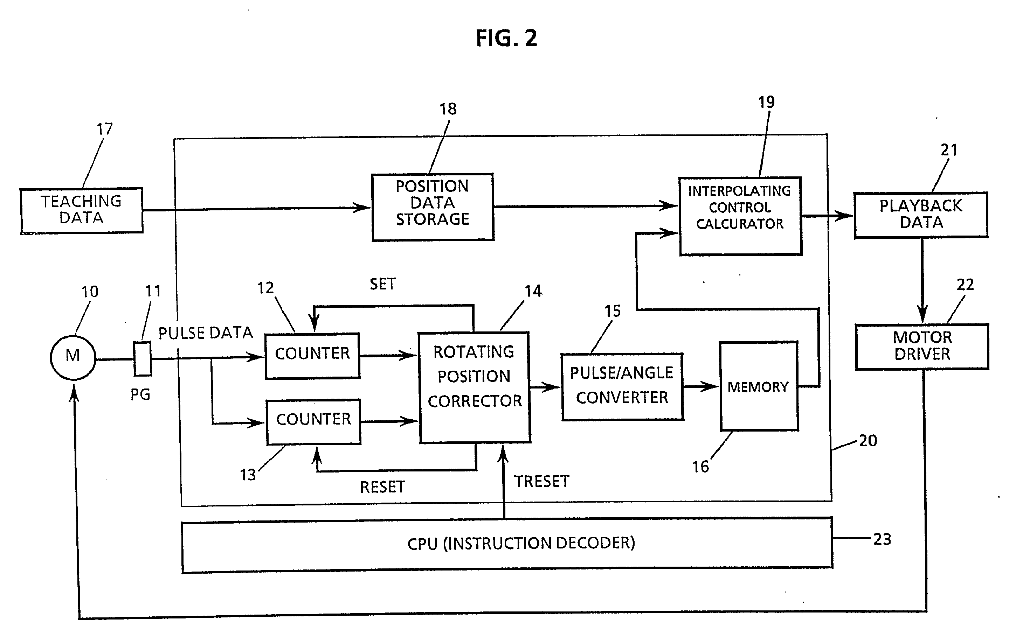

In more detail, above calculation is conducted by the controller shown in Fig. 2. In Fig. 2, the pulse data from the PG (pulse generator) 11 for detecting the rotating position of axis drive motor 10 is received by CPU (central processing unit) 20 and is counted by a pair of counters 12, 13 in this timing.

The counter 12 counts up the pulse data from PG 11, while the counter 13 counts up rotation numbers of the axis.

When the position correcting instruction TRESET is executed from CPU (instruction decoder) 23 for decoding programs, the rotating position corrector 14 starts to execute the position correcting calculation of

current value (data of counter 12) - resolution value ×

the integer number of rotation (data of counter 13) and also conducts the processing for setting the corrected current value to the counter 12 and resetting (clearing) the rotation data of the counter 13. Here, resolution value means the number of output pulses of drive motor 10 (output of pulse generator PG 11) required for a single rotation of the axis.

The current value pulse data corrected in the position corrector 14 is converted to the angle data by the pulse/angle converter 15 and is then stored in the memory 16.

Thereafter, the position data 18 generated from the teaching data 17 and corrected angle data are fetched at the time of executing the playback operation, the interpolating calculation is carried out by the interpolating control calculator 19, the angles $\theta_1$ - $\theta_6$ of axes are calculated and these are output to the motor drive unit 22 as the playback data 21 to operate the robot.

An example of calculation in the rotating position corrector 14 will be considered here. For example, the resolution of the 6th axis is assumed as 100,000. In this case, it is also supposed that the 6th axis makes five turns and the current value of 6th axis becomes "540,000". If the linear interpolating operation is attempted by the conventional method, an alarm is generated from the robot controller by the reasons described above, disabling the operation of robot. When the calculation "current value - resolution value × number of rotations" is carried out in the rotating position corrector 14 shown in Fig. 2, the result "540,000 - 100,000 × 5 = 40,000" can be obtained. Therefore, the interpolating control operation by the method of Fig. 4 can be realized by updating the current value to "40,000".

The present invention will then be explained with a simple program for applying the present invention to the robot system for part painting.

In this example, following processes are carried out.

1) A robot hand catches a shaft of a work which has been hung by a hanger conveyor for entry.

2)   While being hung, the work is rotated and soaked into the paint with its shaft positioned in vertical and is then rotated for several turns.

3)   While being rotated, the work is taken out from the paint and is hung by the hanger conveyor while the shaft thereof is kept in vertical and then sent to the next drying process.

The following program describes a part of the painting process.

| Line | Step | Instruction | | Note |
|------|------|------------|------|------|
| 0000 | 000  | NOP        |      |      |
| 0001 | 001  | MOVJ VJ=20.00 |   | (1)  |
| 0002 | 002  | MOVL V =375.0 |   | (2)  |
| 0003 | 003  | MOVL V =50.0  |   | (3)  |
| 0004 | 004  | MOVJ VJ=50.00 | WT=3 | (4) |
| 0005 | 005  | MOVJ VJ=40.00 | WT=5 | (5) |
| 0006 | 006  | MOVJ VJ=40.00 | WT=5 | (6) |
| 0007 | 007  | MOVJ VJ=50.00 |   | (7)  |
| 0008 |      | TRESET     |      | (8)  |
| 0009 | 008  | MOVL V =500.0 |   | (9)  |
| 0010 | 009  | MOVL V =800.0 |   | (10) |
| 0011 |      | END        |      |      |

Of the program language, the instruction word "MOVJ" indicates the link operation; "MOVL", the linear interpolating operation; "V", linear speed; "VJ", speed

designation (percentage of maximum speed) during the link operation; "WT", designation of rotation; "TRESET", a command to replace the position signal of drive motor of 6th axis with the calculation of "current value - resolution value × number of rotations".

Operations in each step are as follows.

(1): Moving to the saving position of robot.

(2), (3): Clamping the shaft of the work hung by the hanger conveyor with a hand attached to the end part of wrist of robot.

(4): After clamping the shaft of work, rotating the 6th axis for three turns.

(5): Soaking a work into the paint while the 6th axis thereof is rotated for five turns.

(6): Lifting the work from the paint while the 6th axis thereof is rotated for five turns.

(7): Moving the robot to the saving position without rotation of the 6th axis.

(8): Resetting the current value pulse of the 6th axis.

(9), (10): Operating to the next step position by the linear interpolation.

With execution of the TRESET instruction in step (8) listed above, the current value of 6th axis is reset to the data within +1 turn. Therefore, the robot can realize the operations with the linear interpolating operation.

In this embodiment, the linear interpolation as a kind of interpolating operation is listed as an example. But, it is a matter of course that the other interpolating method, for example, a curve interpolation such as curvilinear interpolation, parabolic interpolation and spline curve interpolation can be used.

In above explanation, the method described in the Japanese Laid-open Patent No. 62-193786 has been introduced as a method of reverse inversion to convert the rectangular coordinate data into the data of each joint coordinate system at the time of executing the linear interpolating operation. However, the reverse conversion method is not limited only to this method and other reverse conversion method can also be employed.

As described previously, a signal obtained by adding or subtracting the signal corresponding to the integer times of the number of rotations of axis to/from the rotating position signal after rotation of the axis in accordance with the positive or negative sign of the rotating position signal is given as the rotating position at the time of starting posture control operation so that the signal indicating the rotating position after rotation of axis is set within the range of ±360° for the reference position of axis. Thereby, the interpolating operation can be made smoothly by the present invention for the area of ±360° or more for which the interpolating operation of robot has been difficult by the prior art and the operation range of the multiple joint type robot can be widened as much. Moreover, the robot can now be used in the field where it has never been introduced.

[INDUSTRIAL FEASIBILITY]

The present invention can be used for control of the robot which realizes painting by rotating works, the robot which realizes grinding by holding works or the robot which realizes coating by holding works.

CLAIMS

1. A control method of a multi-axis joint type robot controlled by teaching playback system having at least one multi-rotating axis having an operating range of ±360° or more, said robot executing an interpolating operation in succession after multiple rotation of said multi-rotating axis under link operation, characterized by starting said interpolating operation after supplying a signal as the current rotating position at the time of starting said interpolating operation, said signal is obtained by subtracting a rotation signal corresponding to the integer number of rotations for the reference position of said multi-rotating axis from the rotating position signal after said multiple rotation of said multi-rotating axis, so that the rotating position signal after said rotation of said multi-rotating axis becomes a signal corresponding to the angle range under ±360° for the reference position of said multi-rotating axis.

2. A control method of a robot according to claim 1, wherein when the rotating position signal after said multiple rotation of said multi-rotating axis has a negative sign, the signal obtained by adding a rotation signal corresponding to the integer number of rotations for said reference position of said multi-rotating axis to said rotating position signal is applied as the current rotating position at the time of starting the interpolating operation.

3. A control method of a robot according to claim 1 or 2, wherein the interpolating operation is the linear interpolation.

4. A control method of a robot according to claim 1 or 2, wherein the interpolating operation is the curvilinear interpolation.

5. A control apparatus of a multi-axis joint type robot controlled by teaching playback system having at least one multi-rotating axis having an operating range of ±360° or more, said apparatus comprising:

a means for detecting rotating position signal for the reference position of said multi-rotating axis;

a rotation calculating means for calculating a rotation signal corresponding to the integer number of rotations for said reference position of said multi-rotating axis based on said detected rotating position signal;

a rotating position correcting means for subtracting said calculated rotation signal from said rotating position signal before shifting to the interpolating operation; and

an interpolation control calculating means for obtaining the interpolation data based on the corrected rotating position signal calculated by said rotating position correcting means and the position data obtained on the basis of the teaching data.

6. A control apparatus of a robot according to claim 5, wherein said rotating position correcting means adds the rotation signal calculated on said rotating position signal to said rotating position signal when the rotating position signal after said multiple rotation of said multi-rotating axis has a negative sign.

7. A control apparatus of a robot according to claim 5 or 6, wherein the interpolating operation is the linear interpolation.

8. A control apparatus of a robot according to claim 5 or 6, wherein the interpolating operation is the curvilinear interpolation.

# FIG. 1

## FIG. 2

TEACHING DATA — 17

POSITION DATA STORAGE — 18

INTERPOLATING CONTROL CALCURATOR — 19

PLAYBACK DATA — 21

MOTOR DRIVER — 22

M — 10

PG — 11

PULSE DATA

SET

COUNTER — 12

COUNTER — 13

RESET

ROTATING POSITION CORRECTOR — 14

TRESET

PULSE/ANGLE CONVERTER — 15

MEMORY — 16

20

CPU (INSTRUCTION DECODER) — 23

EP 0 369 028 A1

# FIG. 3

## FIG. 4

## FIG. 5A

## FIG. 6A

## FIG. 5B

## FIG. 6B

# INTERNATIONAL SEARCH REPORT

International Application No PCT/JP89/00457

**I. CLASSIFICATION OF SUBJECT MATTER** (if several classification symbols apply, indicate all) 6

According to International Patent Classification (IPC) or to both National Classification and IPC

Int. Cl⁴   B25J9/10, 9/16, G05D3/00

**II. FIELDS SEARCHED**

Minimum Documentation Searched 7

| Classification System 1 | Classification Symbols |
| --- | --- |
| IPC | B25J9/10-9/22, 13/00, G05D3/00 |

Documentation Searched other than Minimum Documentation
to the Extent that such Documents are Included in the Fields Searched 8

Jitsuyo Shinan Koho         1926 - 1988
Kokai Jitsuyo Shinan Koho   1971 - 1988

**III. DOCUMENTS CONSIDERED TO BE RELEVANT** 9

| Category * | Citation of Document, 11 with indication, where appropriate, of the relevant passages 12 | Relevant to Claim No. 13 |
| --- | --- | --- |
| A | JP, A, 57-27689 (Shin Meiwa Industry Co., Ltd.) 15 February 1982 (15. 02. 82) (Family: none) | 3, 4 |
| A | JP, A, 58-155184 (Shin Meiwa Industry Co., Ltd.) 14 September 1983 (14. 09. 83) (Family: none) | 3, 4 |
| A | JP, A, 59-59370 (Shin Meiwa Industry Co., Ltd.) 5 April 1984 (05. 04. 84) (Family: none) | 3, 4 |
| A | JP, A, 60-44293 (Hitachi, Ltd.) 9 March 1985 (09. 03. 85) (Family: none) | 3, 4 |
| A | JP, A, 60-95608 (NEC Corporation) 29 May 1985 (29. 05. 85) (Family: none) | 3, 4 |
| A | JP, A, 60-124704 (Yasukawa Electric Mfg. Co. Ltd.) 3 July 1985 (03. 07. 85)(Family: none) | 3, 4 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
| --- | --- |
| July 20, 1989 (20. 07. 89) | July 31, 1989 (31. 07. 89) |

| International Searching Authority | Signature of Authorized Officer |
| --- | --- |
| Japanese Patent Office | |

Form PCT ISA/210 (second sheet) (January 1985)

| FURTHER INFORMATION CONTINUED FROM THE SECOND SHEET | | |
|---|---|---|
| A | JP, A, 61-91705 (Mitsubishi Heavy Industries, Ltd.) 9 May 1986 (09. 05. 86) (Family: none) | 3, 4 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers ..........., because they relate to subject matter not required to be searched by this Authority, namely:

2.☐ Claim numbers ..........., because they relate to parts of the international application that do not comply with the prescribed requirements to such an extent that no meaningful international search can be carried out, specifically:

3.☐ Claim numbers ..........., because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)